# EUROPEAN PATENT APPLICATION

(11) **EP 2 998 091 A1**
(43) Date of publication of application: **23.03.2016**
(21) Application number: 14185075.0
(22) Date of filing: 17.09.2014
(51) Int. Cl.: B29C 43/22, B29C 47/32, B29C 43/48, A01G 25/02

(54) **Continuous molded irrigation emitter strip**

(71) Applicant: Advanced Automation Systems Ltd., 3056 Limassol (CY)
(72) Inventor:
(74) Representative: Lemcke, Brommer & Partner Patentanwälte Partnerschaft mbB

(57) **Abstract**

A method and related apparatus of manufacturing a continuous strip member having at least one surface structured with a surface pattern are described, which employs a rotating mold wheel in conjunction with a belt tensioned around and moving with the rotating mold wheel. A continuous bead of molten thermoplastic material is drawn and applied between the rotating mold wheel and the moving belt to extrude the continuous strip member. The mold wheel carries on its outer circumference a structure serving as a series of mold cavities designed to form the surface pattern onto the continuous strip member. The moving belt applies a compressive force onto the molten thermoplastic material thus forcing the material into the mold cavities until the material has sufficiently solidified, thereby taking on the contours of the mold cavities.

## Description

### Field of the Invention

The present invention relates to the field of micro-irrigation and more particularly to a method and related apparatus for manufacturing of a continuous molded irrigation emitter strip for use in a drip irrigation hose.

### Background of the Invention

In modern agriculture today, with the ever growing human population and the dwindling water resources, particularly in arid regions of the world, micro-irrigation systems have gained increasing importance over older irrigation methods, such as flood irrigation and sprinkler systems.

Micro-irrigation, also often termed drip irrigation, is an irrigation method that in proper application, delivers water in small doses directly to the roots of plants, either onto the soil surface or directly onto the root zone of crop plants. Thus, wasted water due to run-off, evaporation, or the like is substantially reduced. Micro-irrigation also has numerous other benefits as an efficient method of delivering fertilizer to the crop root zones; thus, saving labor and fertilizer costs while also reducing environmental pollution as a consequence.

Important elements in a micro-irrigation system are the emitters. An emitter, which is also called a dripper, is used to transfer water from a pipe or tube to the area that is to be irrigated. Typical emitter flow rates are from 0.6 to 16 liters per hour. An emitting pipe or hose is a type of drip irrigation tubing with emitters pre-installed at the factory with specific distance and flow per hour as per crop distance.

Traditionally, emitters were built by tiny nozzles or tips to release the water drips to the soil. However, instead of releasing water through tiny holes, which can be easily plugged by particles, surface drip irrigation emitters have been proposed, which release water through larger and longer passageways by using velocity to slow water inside the emitter.

There are two major classes of drip irrigation systems currently employed. One involves a plurality of discrete drip emitters installed either internally or external-ly along the length of the irrigation hose. The other involves a continuously formed emitter strip having a plurality of drip emitters formed along its entire length.

US7887664 describes a continuous strip member for use as drip emitter strip in an irrigation hose. The continuous strip member is formed by extruding a substrate using a first mold wheel extruder and allowing the substrate to cool. Then a flow path is extruded on the substrate using a second mold wheel extruder. The continuous strip member is then operatively connected to the inner wall of the irrigation hose.

### Summary of the Invention

The two step production process described in US7887664 is complex in that it requires two separate mold wheel extruders. It is also difficult to manage the two step process at sufficiently high accuracy to achieve high quality emitter strips at low production tolerances. Moreover, the production speed is limited by the time required for the flat strip produced by the first mold wheel extruder to sufficiently solidify. A higher production speed will ultimately result in a loss of quality, if the flat strip will still be prone to stretching to a certain extent when it enters the second stage mold wheel extruder.

It is thus an object of the present invention to provide method and related apparatus for manufacturing of a continuous molded irrigation emitter strip for use in a drip irrigation hose, which is capable of making high quality emitter strips at high speeds.

These and other objects that appear below are achieved by a method of manufacturing a continuous strip member according to claim 1, by a method of manufacturing an irrigation hose according to claim 8, and by a molding apparatus for manufacturing a continuous strip member according to claim 10. Preferred embodiments are defined by the dependent claims.

According to the present invention, a rotating mold wheel is employed in conjunction with a belt tensioned around and moving with the rotating mold wheel. A continuous bead of molten thermoplastic material is drawn and applied between the rotating mold wheel and the moving belt to extrude a continuous strip member. The mold wheel carries on its outer circumference a structure serving as a series of mold cavities designed to form a surface pattern onto the continuous strip member. The moving belt applies a compressive force onto the molten thermoplastic material thus forcing the material into the mold cavities and holds the material in place until it has sufficiently solidified, thereby taking on the contours of the mold cavities.

Accordingly, the present invention provides a hybrid method which combines the advantages of extruding and injection molding. Injection molding is known as an ideal manufacturing method for producing discrete components. However, the present invention differentiates itself from traditional injection molding since the features molded onto the strip member are done so in a repeating pattern along a continuous strip.

During the continuous strip molding process, molten plastic material is continuously drawn from an extruder discharge nozzle, and then forced between the belt and the rotating mold wheel surface, into a continuous mold cavity existing about the outer circumference of the mold wheel. Similar to injection molding, the belt in conjunction with the rotating mold wheel continuously force the plas-tic material into a series of mold cavities, and then hold the plastic material in the mold cavities until the material has solidified in a desired shape. The molten material does not stick to the belt but the belt supports the extruded strip member until it has sufficiently solidified and thus avoids deformation of the strip member.

Alternatively, or additionally, it is also possible that the moving belt carries a structure that serves as a mold cavity. For instance, the belt could be injection molded to have the molding cavity built into it. This variant may be advantageously in terms of mold cavity production costs and mold cavity shipping costs. Use of a structured belt in combination with a structured wheel will also allow production of a strip having a molded structure on both sides.

On the other hand, the embodiment, in which the mold cavity is cut into the surface of the mold wheel, is preferred in terms of cooling properties. Since the wheel is at the same time responsible for removing heat from the plastic strip, in case the mold cavity is provided in the wheel, the surface contact between the plastic strip and thus the cooling surface will be maximized.

The present invention addresses specific processing challenges faced when attempting to quickly form and then set thermoplastics such as polyethylene. In terms of material, polyethylene is a preferred choice for the subject application as an emitter strip in an irrigation hose due to its costs, availability and because of its properties, such as chemical resistance, melting point, strength, durability, and so on. It should be understood, however, that the subject method might also be employed with other thermoplastic as well as non-thermoplastic materials including chemically or light-setting systems.

It should be clear, too, that this extrusion method is not necessarily limited to the production of surface emitter strips. However, the latter is an important application of the new method and will be described in more details below.

The surface pattern in one embodiment represents a flow path of a surface irrigation emitter strip. More particularly, the surface pattern represents a series of emitters, each having a water inlet zone, a labyrinth zone, and an outlet zone.

As mentioned, the strip can serve as a continuous surface emitter strip. Alternatively, a series of emitters can be formed into the continuous strip, representing a continuous array of discrete molded emitters, which can be separated (i.e. cut into pieces) at a later stage.

Preferably, the belt will be arranged in the form of a closed loop and one or more guide rollers will be provided, which guide the belt to and from said mold wheel. For instance, at least one guide roller can form a reversal point for the belt, from which said belt is guided back in reverse direction. Alternatively, the belt can be curved to and away from the mold wheel through corresponding guide rollers and fed back to the mold wheel in a closed loop in the same direction of movement.

The point at which the belt engages with the outer surface of the rotating mold wheel is referred to as the pinch point. The molten thermoplastic material will be drawn from a discharge nozzle and then forced between the belt and the rotating mold wheel at this pinch point.

The point where the belt leaves the rotating mold wheel is referred to as the release point. The finished and cooled down strip member will come off of the mold wheel behind this release point.

The molten thermoplastic material will be applied to the mold wheel at a first temperature above the melting point of the material. During its passage around the mold wheel, the thermoplastic material cools down to a second temperature at which the thermoplastic material has solidified.

According to another aspect of the invention, a method of manufacturing an irrigation hose is provided, which includes manufacturing of a continuous strip member as disclosed above. A hose is then extruded from a second molten material, which can be of the same material composition as the continuous strip member or of any other suitable material composition. The continuous strip member is then connected to an inner wall of this hose.

Preferably, the surface pattern of the continuous strip member contains a series of emitters. Perforations are then formed in the outside surface of the hose at locations corresponding to these individual emitters on the surface of said strip member.

According to another aspect of the invention, a molding apparatus is provided, which can be used for manufacturing a continuous strip member as disclosed above. The apparatus contains a rotating mold wheel carrying on its outer circumference a structure serving as a series of mold cavities to form the surface pattern onto the continuous strip member. A discharge nozzle, sometimes also referred to as a die extruder head, is designed and arranged to discharge a continuous bead of molten thermoplastic material onto the rotating mold wheel. A belt is tensioned around and moves with the rotating mold wheel thereby applying a compressive force onto the molten thermoplastic material to force the material into the mold cavities until the material has set. Particularly, the discharge nozzle is arranged such that the bead of molten thermoplastic material is applied between the rotating mold wheel and the belt.

Other aspects, features, and advantages will be disclosed in the following description of embodiments.

### Brief Description of the Drawings

Embodiments of the present invention will be described below with reference to the accompanying drawings, in which
- fig. 1: shows a molding apparatus in accordance with the present invention;
- fig. 2: shows a similar molding apparatus with an additional conveyor unit for the molded strip;
- fig. 3: shows an embodiment of a surface emitter strip produced in accordance with the present invention; and
- fig. 4: shows an enlarged detail view of the strip of figure 3.

### Detailed Description of Embodiments

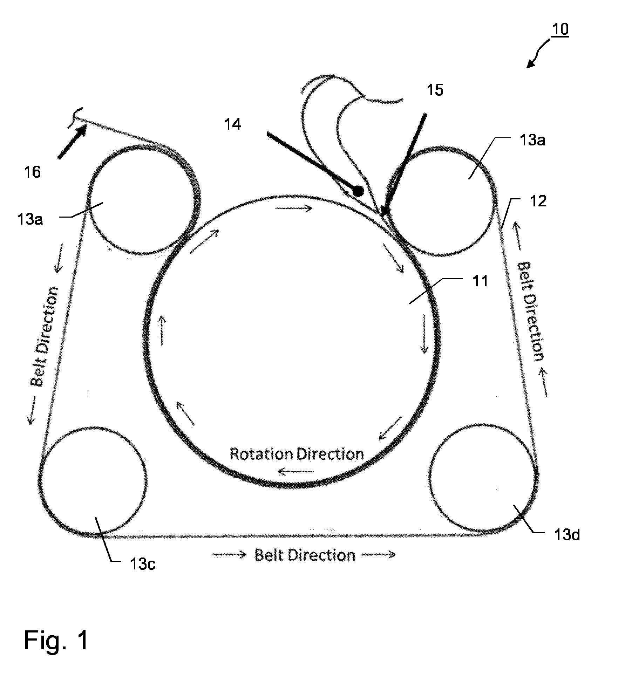

An embodiment of a continuous molding apparatus 10 is shown schematically in figure 1. The apparatus has a mold wheel 11 and a moving belt 12 tensioned around the mold wheel 11 by means of four guide rollers 13a-d. The belt 12 has the form of a closed loop and runs from guide roller 13a around the mold wheel 11 to guide roller 13b, where it leaves the mold wheel and is guided in reverse direction via guide rollers 13c and 13d back to guide roller 13a. Between guide rollers 13a and 13b, the belts engages firmly against the outer surface of the mold wheel 11 and moves in the same direction and with the same speed as mold wheel 11 rotates.

Mold wheel 11 is driven to rotate by a motor (not shown). Moving belt 12 tensioned around mold wheel 11 can be moved passively with the mold wheel 11 through friction between its inner belt surface and the outer surface of the mold wheel 11, or can be driven separately by the same or an additional motor (not shown). In the latter case, the independent motors will be synchronized to each other so that belt 12 and the outer surface of wheel 11 move at (approximately) the same speed.

In order to properly tension the belt 12, at least one of the guide rollers 13a-d can be mounted on a linear slide, for instance. Belt tension will be maintained by an air cylinder (not shown) or any other kind of spring mechanism, which provides the appropriate tension to the belt by pulling the corresponding guide roller aside.

The point where the belt 12 comes in contact with the mold wheel 11 near guide roller 13a is called the pinch point and the point, at which contact between the belt 12 and mold wheel 11 ends and belt 12 leaves the mold wheel 11 near guide roller 13b, is called the release point.

An extruder discharge nozzle 14 is arranged close to the pinch point and extrudes a bead of molten thermoplastic material 15 onto the mold wheel 11. The molten plastic material 15 drawn from extruder discharge nozzle 14 is then compressed between the rotating mold wheel 11 and the moving belt 12. The mold wheel carries at its outer surface a structure that serves as a series of mold cavities. The belt 12 forces the molten plastic material 15 into the mold cavities at the outer circumference of the rotating mold wheel 11 and firmly keeps the material in place until it has cooled down along its passage around the mold wheel 11 and has thus solidified.

In other words, the moving belt 12 in conjunction with the rotating mold wheel 11 together operatively force and then hold under pressure the molten plastic material 15 in the mold cavities of the mold wheel 11 until it has solidified and thereby takes on the contours of the mold cavities. In that the belt 12 supports the plastic material along its passage around the mold wheel 11, any tensile stress on the continuous strip member thus extruded is avoided, so that the strip will not lose its definition when it is still in a state susceptible to stretching.

In an embodiment, the continuous strip member is made of polyethylene. The bead of polyethylene will exit the extruder die at a temperature ranging from 176° C to 232° C. Other kind of thermoplastics may include polypropylene, acrylics, polyamides, polyvinyl chloride, or polytetrafluoroethylene. The discharge temperature of the molten material will be adjusted according to the melting point of the material actually chosen.

Essentially, thermoplastics may include thermo-softening plastics and thermosetting plastics, which both can be used for the purpose of the present invention. Thermo-softening plastics can be made 'plastic' and malleable at high temperatures. Thermoplastic polymers typically soften anywhere between 65 °C and 200+ °C. In this state they can be molded. They differ from thermosetting plastics in that they can be returned to this plastic state by reheating. Thermosetting plastics on the other hand differ in that they are not re-moldable. Strong cross links are formed during the initial molding process that give the material a stable structure.

Sticking between the moving belt 12 and the molten material 15 can be avoided through proper belt design and material selection, as will be apparent to those skilled in the art.

In a preferred embodiment, the mold wheel 11 will be cooled and thus will remove heat from the extruded plastic strip 16, so that the strip is "freezing off" from the mold wheel 11 relatively quickly. Cooling can be achieved by ventilation, for instance, preferably in combination with cooling fins, a heat sink, or the like attached to the mold wheel at one of his side surfaces. Alternatively or additionally, the mold wheel as such can be made of a material such as aluminum that can quickly dissipate heat.

At the release point, the meanwhile solidified continuous strip 16 comes off of the mold wheel 11 and can be managed appropriately. The final strip can be either coiled up and stored for later use, or it can be directly fed to a second extruder stage, where an irrigation hose is extruded from molten material and the continuous strip is laminated to the hose.

In the latter case, as the continuous strip exits the mold apparatus, it is drawn away at a speed slightly higher than production speed. The continuous strip is then drawn into a plastic extruder crosshead die of the hose extruder so that it can be channeled into the inner area of a continuously extruded polyethylene tube. While this continuously extruded polyethylene tube is still in a relatively molten state, the continuous strip is attached to the inner wall of the polyeth-ylene tube wall and sticks there to the soft material of the inner wall of the extruded hose. The continuous strip is thus firmly adhered to the inner surface of the irrigation hose.

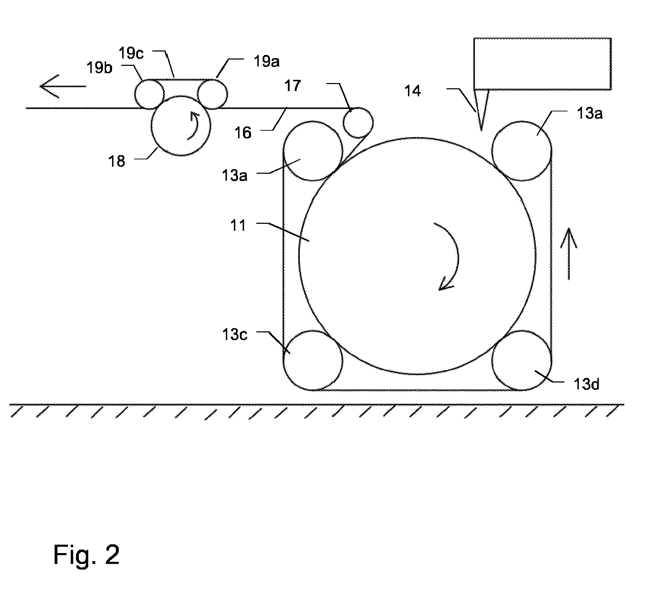

In figure 2, in addition to figure 1, the molding apparatus 10 is shown together with a conveyor unit for the transport of the molded and cooled strip 16. The cooled strip coming off from the mold wheel 11 is drawn away and guided towards the conveyor unit by a guide roller 17. The conveyor unit has a drive pulley 18 driven by a motor (not shown). Two rollers 19a, 19b and a belt 19c wound around the two hold the plastic strip 16 against the drive pulley 19, so that the strip is drawn away from the model wheel 11 at a speed slightly higher than the speed of the mold wheel 11 and thus kept under permanent tension.

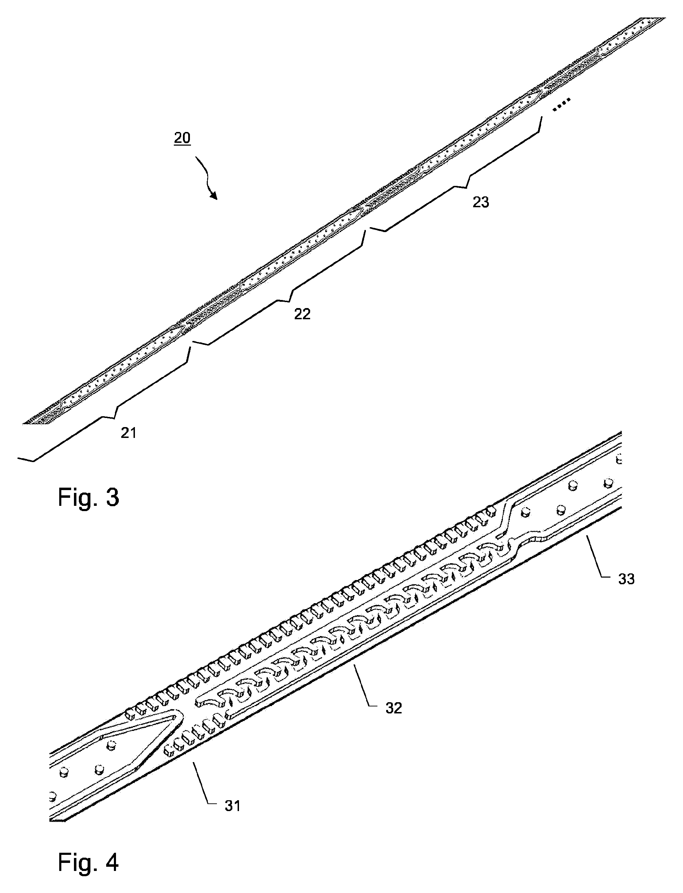

In figure 3, an embodiment of a molded irrigation emitter strip in accordance with the present invention is shown. The strip 20 contains a flow path, which is structured into a repeating structure of surface drip emitters 21, 22, 23 ..., each having a water inlet zone, a labyrinth zone, and an outlet zone. A detail view of the strip is shown in figure 4. The water inlet zone is shown at 31, the labyrinth zone at 32 and the outlet zone at 33.

Noteworthy, the particular design of the surface emitter is just shown by way of a non-limiting example and surface emitters of similar or different design are known per se in the art and can be manufactured in accordance with and used for the purpose of the present invention.

After the emitter strip 20 is inserted into an irrigation hose when the latter is extruded, perforations will be formed in the outside surface of the hose at locations corresponding to the outlet zones of the individual emitters 21, 22, 23. For instance small slits can be cut into the irrigation hose at appropriate locations, through which water released from the outlet zone of the corresponding emitter structure can drip.

## Claims

1. A method of manufacturing a continuous strip member (16, 20) having at least one surface structured with a surface pattern (31, 32, 33), the method comprising drawing a continuous bead of malleable plastic material (15), preferably molten thermoplastic material (15), onto a rotating mold wheel (11);
**characterized in that**
said bead of malleable plastic material (15) is applied between said rotating mold wheel (11) and a belt (12) tensioned around and moving with said rotating mold wheel (11); that said mold wheel and/or said belt carries on its outer circumference or its inner surface, respectively, a structure serving as a series of mold cavities designed to form said surface pattern (31, 32, 33) onto said continuous strip member (16, 20); and that said belt applies a compressive force onto said malleable plastic material (15) to force said material into said mold cavities until said material has set.

2. A method according to claim 1, wherein said mold cavities are designed to form into said continuous strip member (16, 20) in a repeating pattern a series of emitters (21, 22, 23), each having a water inlet zone (31), a labyrinth zone (32), and an outlet zone (33).

3. A method according to claim 2, wherein said series of emitters (21, 22, 23) formed into said continuous strip member (16, 20) represent a continuous array of discrete molded emitters.

4. A method according to any of the preceding claims, wherein said belt (12) is arranged in the form of a closed loop and wherein at least one guide roller (13a, 13b) is provided which forms a reversal point for said belt (12), from which said belt (12) is guided back in reverse direction.

5. A method according to any of the preceding claims, wherein said belt (12) engages with the outer surface of said rotating mold wheel (11) at a pinch point, and wherein said molten thermoplastic material is drawn from a discharge nozzle (14) and then forced at said pinch point between said belt (12) and said rotating mold wheel (11).

6. A method according to any of the preceding claims, wherein said belt (12) leaves said rotating mold wheel (11) at a release point, and wherein said strip member (16, 20) is released from said mold wheel (11) behind said release point.

7. A method according to any of the preceding claims, wherein said molten thermoplastic material (15) is applied to said mold wheel (11) at a first temperature and wherein said thermoplastic material (15) is cooled down during its passage around said mold wheel (11) to a second temperature, at which said thermoplastic material (15) has solidified.

8. A method of manufacturing an irrigation hose, comprising manufacturing a continuous strip member (16, 20) according to any of the preceding claims, extruding a hose from a second molten material, and connecting said continuous strip member (16, 20) to an inner wall of said hose.

9. A method of manufacturing an irrigation hose according to claim 8, wherein said surface pattern of said continuous strip member (16, 20) comprises a series of emitters (21, 22, 23), and wherein perforations are formed in the outside surface of said hose at locations corresponding to said emitters (21, 22, 23) on the surface of said strip member (16, 20).

10. A molding apparatus (10) for manufacturing a continuous strip member (16, 20) having at least one surface structured with a surface pattern (31, 32, 33), the apparatus (10) comprising a rotating mold wheel (11) and a discharge nozzle (15) designed to discharge a continuous bead of malleable plastic material (15), preferably molten thermoplastic material (15), onto said rotating mold wheel (11),
**characterized by**
a belt (12) tensioned around and moving with said rotating mold wheel (11) that said mold wheel and/or said belt carries on its outer circumference or its inner surface, respectively, a structure serving as a series of mold cavities designed to form said surface pattern (31, 32, 33) onto said continuous strip member (16, 20); and that said belt is arranged to apply a compressive force onto said malleable plastic material (15) to force said material into said mold cavity until said material has set; wherein said discharge nozzle (14) is arranged such that said bead of malleable plastic material (15) is applied between said rotating mold wheel (11) and said belt (12).

11. An apparatus according to claim 10, wherein said mold cavities are designed to form into said continuous strip member (16, 20) in a repeating pattern a series of emitters (21, 22, 23), each having a water inlet zone (31), a labyrinth zone (32), and an outlet zone (33).

12. An apparatus according to claim 10 or 11, wherein said belt (12) is arranged in the form of a closed loop and wherein one or more guide rollers (13a-13d) are provided, which guide said belt (12) to and from said mold wheel in a closed loop.

13. An apparatus according to any of claim 10 to 12, wherein said belt (12) engages with the outer surface of said rotating mold wheel (11) at a pinch point, and wherein said discharge nozzle (14) is arranged such that said bead of molten thermoplastic material (15) is drawn onto said rotating mold wheel (11) and then forced at said pinch point between said belt (12) and said rotating mold wheel (11).
